# FASCICULE DE BREVET EUROPEEN

(11) **EP 0 392 919 B1**
(45) Date de publication et mention de la délivrance du brevet: **23.03.1994**
(21) Numéro de dépôt: 90400981.8
(22) Date de dépôt: 10.04.1990
(51) Int. Cl.: G21C 3/32

(54) **Embout inférieur d'un assemblage combustible comportant un dispositif de retenue de particules et assemblage combustible comportant un tel embout.**
Brennstabbündelfussstück mit Teilchenfangvorrichtung und Brennstabbündel mit einem solchen Fussstück
Fuel assembly bottom nozzle comprising a particle retaining device and fuel assembly comprising such a bottom nozzle

(30) Priorité: 12.04.1989 FR 8904840
(43) Date de publication de la demande: 17.10.1990
(73) Titulaire: FRAMATOME, 92400 Courbevoie (FR); COGEMA, F-78141 Velizy Villacoublay (FR)
(72) Inventeur: Grattier, Bernard, F-69570 Dardilly (FR)
(74) Mandataire: Bouget, Lucien

(56) Documents cités:
- EP-A- 0 196 611
- EP-A- 0 289 829
- FR-A- 2 500 947
- US-A- 4 684 496
- US-A- 4 832 905

## Description

L'invention concerne un embout inférieur d'un assemblage combustible comportant un dispositif de retenue de particules contenues dans le fluide de refroidissement du réacteur nucléaire, en particulier dans le cas de réacteurs nucléaires à eau sous pression ainsi qu'un assemblage combustible comportant un tel embout.

Les réacteurs nucléaires à eau sous pression comportent un coeur constitué par des assemblages prismatiques disposés côte à côte en position verticale. Les assemblages comportent une ossature fermée par des embouts dans laquelle sont disposés les crayons combustibles qui sont maintenus par des grilles-entretoises espacées les unes des autres suivant la direction longitudinale de l'assemblage.

Les grilles-entretoises constituent un réseau régulier dans lequel certains emplacements sont occupés par des tubes-guides destinés à recevoir les crayons absorbants de grappes de contrôle assurant le pilotage de la puissance dégagée par le coeur du réacteur nucléaire. Une partie au moins des tubes-guides sont reliés aux deux embouts de l'assemblage par leurs parties d'extrémité et assurent la jonction entre les composants de l'ossature et la rigidité de cette ossature.

L'un des embouts des assemblages, appelé embout inférieur, vient reposer sur la plaque inférieure de coeur qui est percée de trous au niveau de chacun des assemblages pour permettre le passage de l'eau de refroidissement du réacteur à travers le coeur dans la direction verticale et de bas en haut.

Le fluide de refroidissement des crayons combustibles traverse la plaque adaptatrice de l'embout inférieur par des ouvertures appelées passages d'eau qui sont soit de forme circulaire (d'un diamètre d'environ 7 à 10 mm) ou oblongue (lumières d'environ 10 mm de large par 15 à 50 mm de longueur). Des débris qui peuvent être présents dans le circuit primaire du réacteur sont susceptibles d'être entraînés par l'eau sous pression en circulation et dans le cas où leur taille est faible (par exemple inférieure à 10 mm) ces débris peuvent passer au travers de la plaque adaptatrice de l'embout inférieur dont les passages d'eau ont une section importante. Ces débris peuvent venir se coincer entre les crayons combustibles et les cellules de la première grille c'est-à-dire de la grille-entretoise maintenant les crayons suivant un réseau régulier disposée le plus bas dans l'assemblage. Ces débris soumis aux sollicitations hydrauliques axiales et transversales qui sont importantes dans cette zone peuvent user le gainage du crayon combustible. Il risque d'en résulter une perte d'étanchéité de ce gainage ainsi qu'une augmentation du taux d'activité du circuit primaire du réacteur.

On a donc proposé des dispositifs permettant de filtrer le fluide de refroidissement du réacteur, soit pendant les essais à chaud, soit encore pendant le fonctionnement du réacteur.

Dans le premier cas, les éléments filtrants peuvent être reliés à la plaque inférieure de coeur et disposés sur celle-ci dans la position des assemblages combustibles, avant le chargement du coeur, comme décrit par exemple dans le FR-A-2.577.345.

Dans le deuxième cas, la plaque adaptatrice elle-même constitue l'élément filtrant, comme décrit par exemple dans le EP-A-O.289.829. Dans ce dispositif, la plaque adaptatrice doit être suffisamment épaisse pour contribuer à la tenue mécanique de l'assemblage, ce qui rend l'usinage des trous de filtration difficile.

Dans le troisième cas, les éléments filtrants sont associés aux assemblages combustibles et généralement disposés dans leur embout inférieur. Les éléments filtrants fixés dans les embouts inférieurs des assemblages combustibles sont généralement constitués par des structures en tôle ou en fils métalliques qui permettent d'arrêter les débris dont la taille est inférieure à la plus grande dimension de la section de passage entre un crayon combustible et une cellule de grille.

De tels éléments filtrants sont décrits par exemple dans les documents US-A-4.664.880, US-A-4.684.496 et EP-A-0.196.611.

De tels dispositifs peuvent être complexes et introduisent une perte de charge relativement importante dans la circulation du fluide de refroidissement à travers l'assemblage combustible.

En outre, ces dispositifs placés dans l'embout inférieur de l'assemblage peuvent être encombrants et gênants lors des opérations de chargement et de déchargement d'assemblages du coeur et lors du démontage et du remontage des liaisons des tubes-guides et de l'embout inférieur.

Certains assemblages combustibles d'une conception récente comportent un ensemble de tubes-guides (par exemple 16 sur 24) qui sont fixés à la fois à l'embout supérieur et à l'embout inférieur de l'assemblage dont ils assurent la rigidité et un ensemble de tubes-guides qui ne sont fixés qu'à l'embout supérieur de l'assemblage. Les tubes-guides du second ensemble engagés librement dans la plaque adaptatrice de l'embout inférieur n'assurent que la fonction de guidage et l'embout inférieur présente dans le prolongement de ces tubes des ouvertures qui restent libres.

Les dispositifs de filtration connus de l'art antérieur sont peu adaptés à ce type d'assemblage.

Le but de l'invention est donc de proposer un embout inférieur d'un assemblage combustible d'un réacteur nucléaire comportant une plaque adaptatrice, des pieds-supports destinés à venir reposer sur la plaque inférieure de coeur du réacteur et un dispositif de retenue de particules contenues dans le fluide de refroidissement du réacteur, constitué par un élément de forme plate ayant le rôle d'une grille de filtration, une filtration du fluide étant effectuée au niveau de l'embout, grâce à l'élément de forme plate, sans introduire de perte de charge excessive sur la circulation du fluide de refroidissement, sans augmenter l'encombrement de l'assemblage combustible au niveau de son embout inférieur et tout en gardant une possibilité de démontage facile de cet embout.

Dans ce but, le dispositif de retenue est constitué par une plaque accolée à la face inférieure de la plaque adaptatrice et percée de trous de filtration disposés en vis-à-vis d'ouvertures de passage de fluide traversant la plaque adaptatrice.

L'invention est également relative à un assemblage combustible comportant un embout inférieur filtrant ayant un dispositif de retenue tel que défini ci-dessus.

Un but de l'invention est également de proposer un assemblage combustible à embout filtrant comportant un premier ensemble de tubes-guides liés à la plaque adaptatrice de son embout inférieur et assurant la rigidité de l'ossature de l'assemblage et un second ensemble de tubes-guides non reliés à l'embout inférieur et engagés librement dans la plaque adaptatrice de cet embout. Selon l'invention, l'assemblage comporte un dispositif de retenue de débris constitué par une plaque de filtration percée de trous fixée contre la face inférieure de la plaque adaptatrice par des moyens de fixation engagés dans des ouvertures de la plaque de filtration disposées en vis-à-vis d'ouvertures traversant la plaque adaptatrice dans le prolongement des tubes-guides du second ensemble.

On va maintenant décrire à titre d'exemples non limitatifs, en se référant aux figures jointes en annexe, plusieurs modes de réalisation d'un embout inférieur d'un assemblage combustible suivant l'invention et d'un assemblage combustible comportant un tel embout.

La figure 1 est une vue en coupe schématique de la partie inférieure d'un assemblage combustible suivant l'invention.

La figure 2 est une vue de dessous suivant II de la figure 1.

La figure 3 est une vue en coupe verticale de la partie inférieure d'un assemblage combustible montrant le montage d'une plaque de filtration dans un embout suivant l'invention et suivant un premier mode de réalisation.

La figure 3A est une vue agrandie du détail A de la figure 3.

La figure 4 est une vue de dessous montrant le montage d'une plaque de filtration suivant l'invention et suivant un second mode de réalisation.

La figure 4A est une vue en coupe suivant A-A de la figure 4 montrant le profil de maintien de la plaque de filtration à l'intérieur du cadre de l'embout.

La figure 5 est une vue de dessous partielle montrant une plaque adaptatrice d'un embout inférieur d'un assemblage comportant deux ensembles différents de tubes-guides, équipée d'une plaque de filtration.

La figure 6 est une vue de dessus d'une plaque de filtration équipant une plaque adaptatrice telle que représentée sur la figure 5.

La figure 7 est une vue en coupe montrant un moyen de fixation d'une plaque de filtration telle que représentée sur la figure 5.

La figure 8 est une vue de dessus partielle d'un mode de réalisation d'une plaque de filtration suivant l'invention.

La figure 8A est une vue en coupe suivant A-A de la figure 8.

La figure 9 est une vue de dessus partielle d'une variante de réalisation de la plaque représentée sur la figure 8.

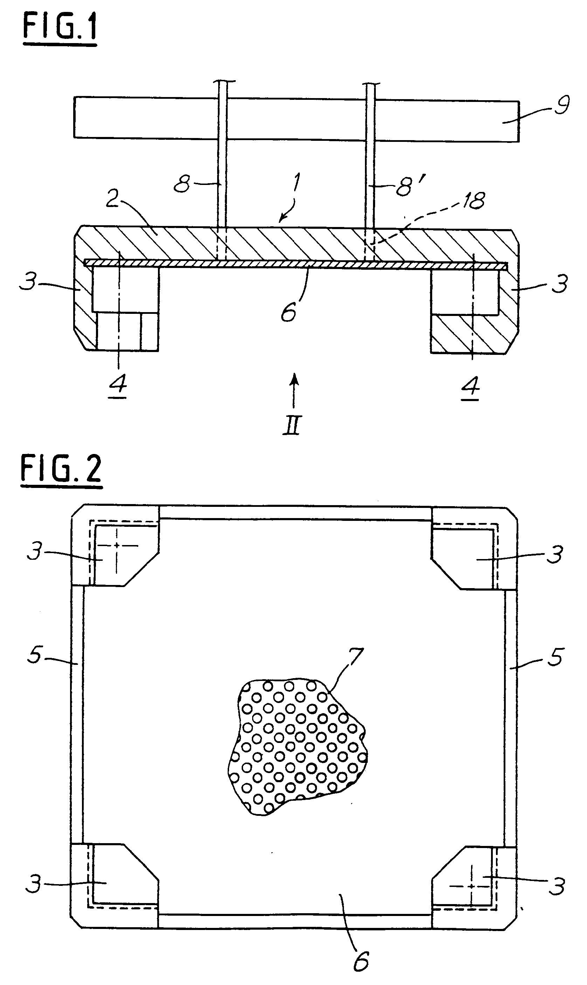

Sur la figure 1, on voit la partie inférieure d'un assemblage combustible d'un réacteur nucléaire comportant l'embout inférieur désigné de manière générale par le repère 1.

Cet embout comporte une plaque adaptatrice 2 traversée par des trous de passage d'eau et des pieds-supports 3 destinés à venir reposer sur la plaque inférieure de coeur 4 du réacteur, lorsque l'assemblage combustible est en service.

Comme il est visible sur la figure 2, l'embout inférieur 1 est fermé par un cadre 5 joignant les pieds 3.

L'assemblage combustible comporte des tubes-guides tels que le tube-guide 8 fixés à leur partie inférieure à la plaque adaptatrice 2 de l'embout 1 et à leur partie supérieure à l'embout supérieur de l'assemblage (non représenté). L'ossature de l'assemblage comporte, en plus des embouts et des tubes-guides 8, des grilles entretoises telles que 9 destinées à assurer le maintien transversal et axial des crayons de l'assemblage et dans lesquelles sont engagés et fixés les tubes- guides 8.

L'assemblage peut comporter également des tubes-guides tels que 8' qui ne sont fixés que dans l'embout supérieur et dans les grilles-entretoises 9 et qui ne sont pas reliés à l'embout inférieur.

A la différence des tubes-guides 8 qui assurent à la fois le guidage des crayons absorbants des grappes de contrôle et la tenue mécanique de l'ossature de l'assemblage, les tubes-guides 8' ne servent qu'à guider des crayons absorbants de la grappe de contrôle.

Une ouverture 18 traverse la plaque adaptatrice 2' dans le prolongement de chacun des tubes 8' engagés librement dans la partie supérieure de la plaque 2'.

Selon l'invention, une plaque de filtration 6 percée de trous est fixée contre la plaque adaptatrice 2 de l'embout inférieur 1, substantiellement sur toute sa surface.

On a représenté les trous traversant la plaque de filtration 6 dans une zone 7 sur la figure 2 mais en réalité, ces trous traversent la plaque sur la quasi totalité de sa surface.

Pour éviter d'avoir à démonter la plaque de filtration 6, il faut s'assurer que les zones de liaison des tubes-guides 8 avec l'embout inférieur restent accessibles.

De plus, dans la partie centrale de la plaque adaptatrice de l'embout inférieur dans certains types d'assemblages combustibles, on met en place un dispositif permettant de protéger le doigt de gant de l'instrumentation des sollicitations hydrauliques.

On peut donc prévoir des ouvertures dans la plaque de filtration dans toutes les zones où cela s'avère nécessaire. On prévoit, par exemple, une zone circulaire d'un diamètre d'environ 20 mm au centre de la plaque, dans le cas d'un assemblage comportant un dispositif de protection du doigt de gant de l'instrumentation.

Dans le cas où l'on réalise des ouvertures d'une certaine dimension dans la plaque de filtration accolée à la plaque adaptatrice, il est nécessaire de modifier la disposition et la dimension des passages d'eau dans la zone correspondante de la plaque adaptatrice. On peut remplacer les passages d'eau habituels par des trous de plus petits diamètres assurant la retenue des débris, a la place de la plaque de filtration, selon une technique connue.

Dans tous les cas, les trous traversant la plaque de filtration ont des dimensions soigneusement déterminées en fonction de la taille maximale des débris dont on accepte qu'ils traversent l'assemblage combustible avec le fluide de refroidissement.

La partie active de la plaque de filtration comportant les trous de passage d'eau occupe la quasi totalité de la surface de la plaque de filtration, à l'exception des zones de liaison entre les tubes-guides et l'embout et de la zone centrale des assemblages qui possède un système de protection du doigt de gant d'instrumentation.

La liaison entre la plaque de filtration et la plaque adaptatrice peut être réalisée de manière permanente ou de manière démontable.

C'est ainsi qu'il est possible d'assurer cette liaison par soudage (par points ou par cordons), par brasage ou par rivetage. On pourra éventuellement utiliser la liaison démontable entre le tube-guide et l'embout inférieur pour assurer la fixation de la plaque de filtration.

Lorsque le fluide de refroidissement parvient sous l'embout inférieur de l'assemblage combustible en traversant la plaque inférieure de coeur 4 au niveau de passages de traversée, les particules dont la dimension est supérieure à une certaine limite sont retenues par la plaque de filtration sous l'embout inférieur de l'assemblage. Ces débris ne sont donc pas susceptibles d'être introduits dans l'assemblage et de se coincer entre les crayons combustibles et les cellules de la première grille-entretoise.

Les ouvertures traversant la plaque de filtration peuvent avoir une forme quelconque et être réalisées par des procédés de perçage ou de découpage de types variés.

Les zones de la plaque séparant les découpes peuvent avoir une largeur réduite, puisque la plaque de filtration est collée à la plaque adaptatrice de l'embout et ne subit donc pas de contrainte mécanique importante sous l'effet du passage du fluide de refroidissement à grande vitesse dans l'embout inférieur de l'assemblage.

Les ouvertures de passage à travers la plaque de filtration peuvent également être réalisées par emboutissage mais dans ce cas, les parties embouties doivent coïncider parfaitement avec les passages d'eau de la plaque adaptatrice, puisqu'elles comportent des parties repoussées en dehors du plan de la plaque de filtration constituant des déflecteurs pour l'eau de refroidissement en circulation.

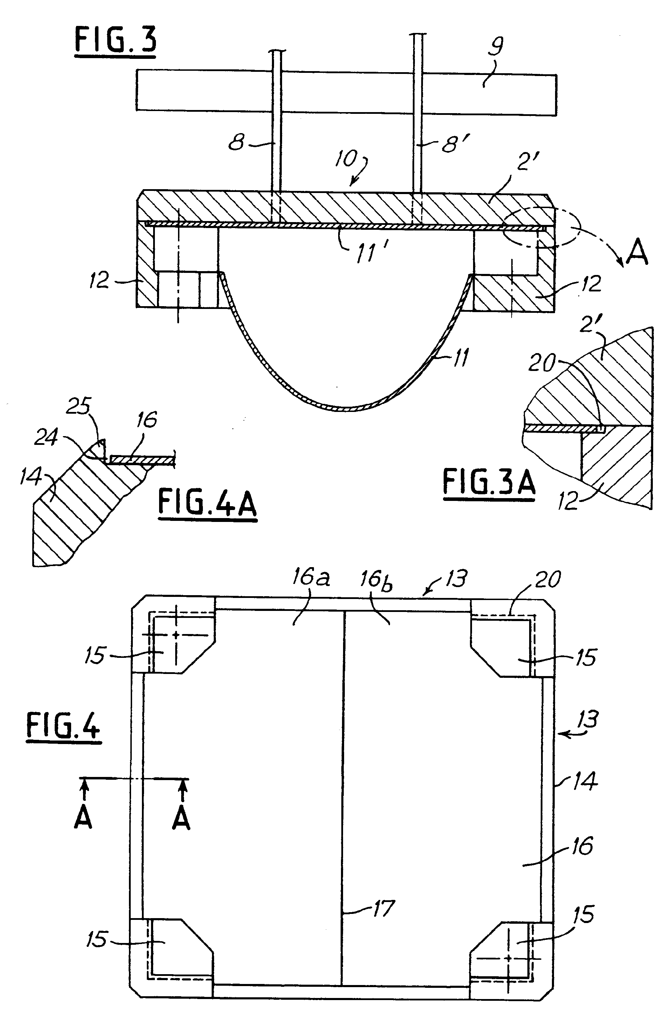

Sur la figure 3, on a représenté un embout inférieur 10 d'un assemblage combustible dans lequel on introduit une plaque de filtration 11 en utilisant l'élasticité de cette plaque pour l'introduire entre les pieds 12 de l'assemblage. La plaque est tout d'abord repliée de manière à passer entre les extrémités intérieures des pieds 12 puis introduite dans la partie intérieure de l'embout 10 et enfin remise dans une disposition plane 11', en-dessous de la plaque adaptatrice 2'. La fixation de la plaque de filtration 11 peut être réalisée par tout moyen tel que le soudage, le brasage, le rivetage ou l'encliquetage ou même par coincement élastique entre les pieds 12, en contact avec la face inférieure de la plaque adaptatrice de l'embout 10.

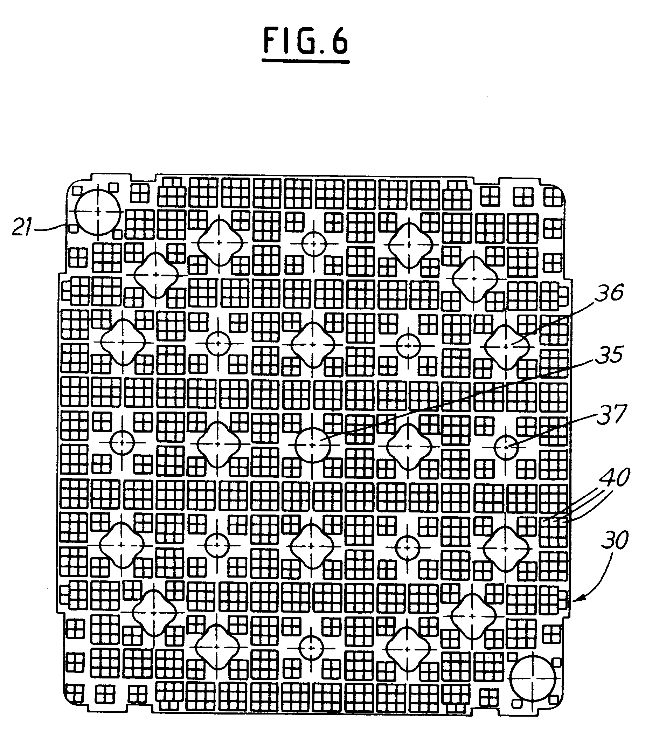

La figure 3A (ou la figure 4) représente le mode de maintien dans chacun des coins d'un embout, de la plaque 11 (ou 16) dans des embrèvements 20 pratiqués dans les pieds 12 (ou 15) de l'embout. La plaque 11 (ou 16) comporte des découpes qui sont introduites dans les gorges 20. De telles découpes sont analogues aux découpes 21 de la plaque de filtration visible sur la figure 6.

Sur la figure 4, on voit un embout inférieur 13 d'un assemblage combustible comportant un cadre 14 entourant une plaque adaptatrice et des pieds-supports 15 dans chacun des angles du cadre 14.

Une plaque de filtration 16 en deux parties 16a, 16b raccordées suivant une médiane 17 de la plaque adaptatrice est introduite dans l'embout et fixée contre la plaque adaptatrice, par exemple par soudage, par brasage ou par encliquetage.

Sur la figure 4A, on voit le détail de positionnement de la plaque de filtration 16 en deux parties représentée sur la figure 4. Le bord de la plaque 16 est introduit dans une gorge 24 délimitée par un épaulement 25 qui protège la plaque contre tout arrachement lors de la manutention des assemblages.

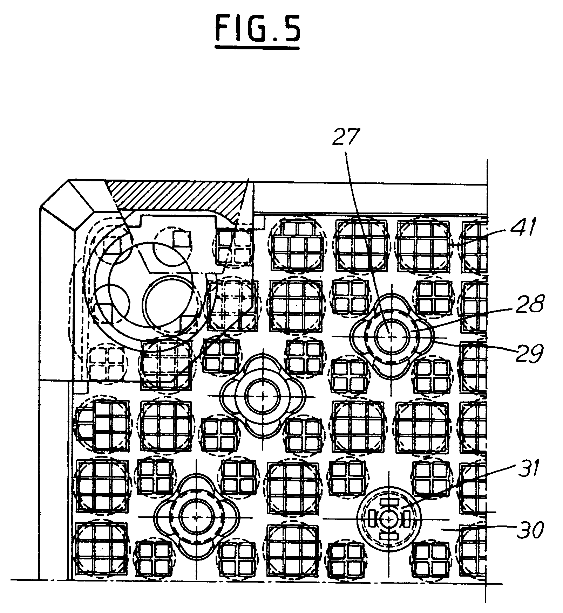

Sur la figure 5, on a représenté en vue de dessous une partie voisine d'un angle, de l'embout inférieur d'un assemblage combustible comportant des tubes-guides dont une partie seulement constitue l'ossature de l'assemblage. La référence 27 désigne l'emplacement d'un tel tube-guide (analogue au tube 8 des figures 1 et 3). Ce tube-guide comporte à son extrémité un bouchon (non représenté) comportant un trou taraudé. Une vis creuse 28 est vissée dans le bouchon. La vis 28 comporte une collerette 29 qui est déformée par expansion dans des embrèvements de la plaque adaptatrice de l'embout. On réalise ainsi le blocage en rotation de la vis 28 de fixation du tube-guide.

La vis 28 qui est accessible grâce à une ouverture dans la plaque de filtration 30 contribue au maintien et à la fixation de la plaque 30 sous la plaque adaptatrice de l'embout.

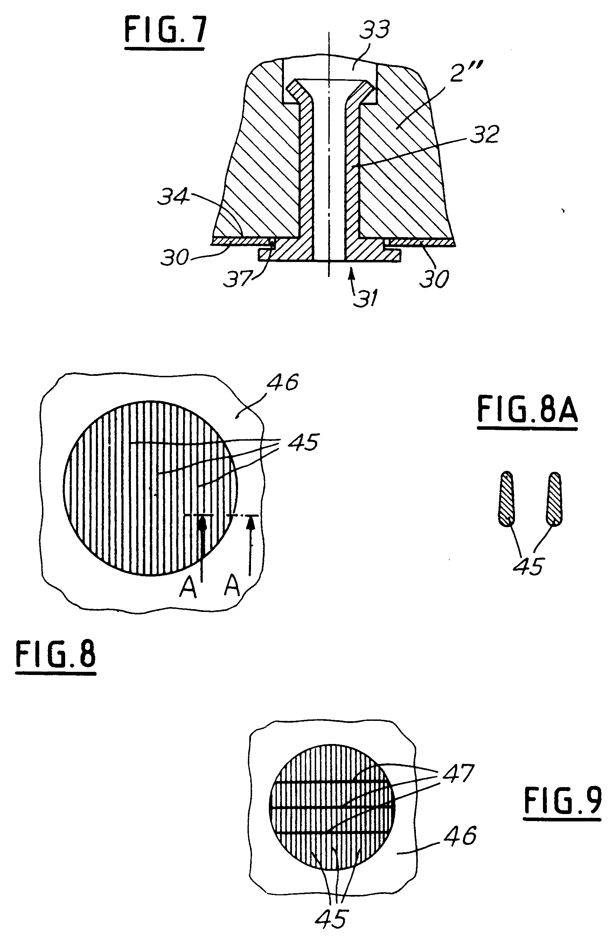

Les emplacements 31 situés à l'aplomb des tubes-guides analogues aux tubes 8' des figures 1 et 3 qui ne sont pas reliés à l'embout inférieur de l'assemblage servent à la fixation de la plaque de filtration 30, comme il est visible sur la figure 7.

Au niveau de chacun des emplacements 31, la plaque adaptatrice 2'' est percée d'une ouverture 33, dans la partie inférieure de laquelle est engagé et bloqué, par déformation, un rivet 32 assurant le maintien de la plaque de filtration 30 contre la face inférieure 34 de la plaque adaptatrice 2''. L'extrémité inférieure des tubes-guides 8' comportant un bouchon est engagée librement dans la partie supérieure de l'ouverture 33. Le rivet 32 est fixé dans un prolongement à diamètre réduit de la partie supérieure de l'ouverture 33 recevant le bouchon du tube-guide.

Sur la figure 6, on a représenté une plaque de filtration 30 qui peut être fixée de la manière qui vient d'être décrite sous la plaque adaptatrice de l'embout inférieur d'un assemblage qui comporte un ensemble de tubes-guides reliés à l'embout inférieur et assurant la rigidité de l'ossature de l'assemblage et un ensemble de tubes-guides non reliés à l'embout inférieur et servant uniquement au guidage de crayons absorbants.

La plaque de filtration 30 est traversée par une ouverture centrale 35 de passage du tube d'instrumentation de l'assemblage, seize ouvertures 36 en forme de trèfle pour le passage des tubes-guides reliés à l'embout inférieur et huit ouvertures 37 circulaires permettant le passage des rivets 32 de fixation de la plaque de filtration 30 sur la plaque adaptatrice de l'embout.

De plus, la plaque 30 est traversée par des ouvertures 40 de forme carrée et de faible dimension disposées suivant un réseau à mailles carrées, dans des positions correspondant aux positions des ouvertures de passage d'eau 41 traversant la plaque adaptatrice (figure 5).

Les ouvertures 40 de forme carrée ont une dimension telle que la plaque de filtration 30 puisse retenir les particules qui sont susceptibles de venir se coincer entre les crayons combustibles et les cellules de la première grille de l'assemblage.

Cette disposition des ouvertures selon un réseau à mailles carrées peut être particulièrement avantageuse dans le cas de certaines dispositions des ouvertures de la plaque adaptatrice, par exemple dans le cas où ces ouvertures sont disposées suivant un réseau à maille carrée.

La plaque 30 est fixée contre la plaque adaptatrice aussi bien par l'intermédiaire des rivets et des tubes-guides traversant les ouvertures 36 et 37 que par les pieds de l'assemblage qui comportent des embrèvements dans lesquels sont engagées des découpes 21 de la plaque de filtration 30.

Sur les figures 8, 8A et 9, on voit une partie d'une plaque de filtration dont la zone active est réalisée sous la forme d'une grille comportant des lamelles parallèles 45 dont l'écartement correspond à la taille minimale des particules dont on veut assurer la retenue au niveau de la plaque de filtration 46.

Les lamelles 45 sont juxtaposées à l'intérieur d'ouvertures circulaires ménagées dans la plaque 46 et dont la dimension correspond à la dimension des trous de passage d'eau de la plaque inférieure de coeur. Ces lamelles 45 peuvent être soudées à leurs extrémités sur les bords de l'ouverture de la plaque de filtration.

Pour limiter la perte de charge du fluide de refroidissement lors de la traversée de la plaque de filtration, les lamelles 45 ont une forme profilée, comme il est visible sur la figure 8A. Cette forme profilée adaptée à l'écoulement du fluide suivant la direction perpendiculaire à la plaque de filtration permet une réduction notable de la perte de charge.

Les lamelles 45 des parties actives de la plaque de filtration 46 sont fixées uniquement à leurs extrémités et sont toutes placées parallèlement les unes aux autres. Ces lamelles sont susceptibles de vibrer sous l'effet des sollicitations hydrauliques du fluide de refroidissement traversant les zones actives de la plaque de filtration 46.

Pour éviter ces vibrations, il est possible de placer des raidisseurs 47 dans des directions perpendiculaires à celles des lamelles 45, comme il est visible sur la figure 9. Les raidisseurs 47 peuvent être soudés ou fixés d'une autre manière sur les lamelles et sur les bords de l'ouverture traversant la plaque de filtration 46.

Dans tous les cas, la plaque de filtration suivant l'invention réalise une retenue efficace des particules contenues dans le fluide de refroidissement du réacteur ayant une taille supérieure à une limite déterminée.

Cette plaque de filtration introduit sur le circuit du fluide de refroidissement une perte de charge modérée, dans la mesure où les ouvertures de la plaque de filtration se trouvent dans le prolongement des ouvertures de traversée de la plaque inférieure de coeur.

Dans le cas où ces ouvertures sont réalisées par emboutissage d'une plaque, les éléments déflecteurs de la plaque sont dirigés dans le sens de l'écoulement, ce qui permet de réduire la perte de charge.

Selon une variante, les lamelles parallèles équipent toute la section de la plaque de filtration 46.

Dans la réalisation d'embouts inférieurs d'assemblages combustibles suivant l'invention, on peut utiliser, pour réaliser la plaque de filtration, tout matériau résistant au fluide de refroidissement du réacteur et aux contraintes mécaniques mises en jeu par le passage du fluide.

De préférence, cette plaque adaptatrice pourra être réalisée en alliage à base de nickel à durcissement structural ou en un acier martensitique.

Dans tous les cas, la plaque de filtration se trouve collée en service contre la plaque adaptatrice et couvre pratiquement la totalité de la surface de cette plaque.

L'embout inférieur suivant l'invention présente l'avantage de permettre de réaliser une filtration efficace du fluide de refroidissement du réacteur, de manière que les particules transportées par ce fluide dont la taille est supérieure à une certaine limite soient retenues sous l'embout inférieur. Le dispositif de retenue des particules utilisé constitué par une plaque de filtration collée sous la plaque adaptatrice de l'embout inférieur n'augmente pas la perte de charge du fluide de refroidissement traversant l'embout inférieur dans des proportions importantes et la plaque de filtration est parfaitement maintenue contre la plaque adaptatrice, si bien qu'elle est susceptible de résister aux efforts produits par le fluide de refroidissement en circulation sans être d'une épaisseur importante, même dans le cas où elle présente des parties pleines séparant les trous de filtration la traversant de faible épaisseur.

L'encombrement général de l'embout inférieur n'est pas augmenté et cet embout peut rester démontable, dans la mesure où on prévoit, dans la plaque de filtration, des ouvertures d'accès à l'extrémité de fixation des tubes-guides sur la plaque adaptatrice.

L'invention ne se limite pas aux modes de réalisation qui ont été décrits.

C'est ainsi qu'on peut imaginer d'autres formes de réalisation et d'autres modes de fixation de la plaque de filtration sous la plaque adaptatrice que ceux qui ont été décrits.

Par exemple, le montage du bord de la plaque de filtration dans une gorge délimitée par un épaulement qui a été décrit dans le cas d'une plaque de filtration en deux parties peut être utilisé de manière générale, dans le cas d'une plaque de filtration réalisée sous une forme quelconque.

Dans le cas d'un assemblage comportant deux ensembles de tubes-guides dont l'un assure la rigidité de l'ossature et dont l'autre ne sert qu'au guidage des crayons absorbants, on peut utiliser d'autres moyens de fixation de la plaque de filtration que des rivets engagés dans des ouvertures de la plaque adaptatrice à l'aplomb des tubes ne servant qu'au guidage, bien que ce mode de fixation soit particulièrement bien adapté.

Enfin, l'invention s'applique à tout assemblage combustible d'un réacteur nucléaire refroidi à l'eau.

## Revendications

1. Embout inférieur d'un assemblage combustible d'un réacteur nucléaire comportant une plaque adaptatrice (2; 2'; 2''), des pieds-supports (3; 12; 15) et un dispositif de retenue de particules contenues dans le fluide de refroidissement du réacteur, caractérisé par le fait que le dispositif de retenue (6; 11; 16; 30; 46) est constitué par une plaque accolée à la face inférieure de la plaque adaptatrice et percée de trous de filtration disposés en vis-à-vis d'ouvertures de passage de fluide traversant la plaque adaptatrice.

2. Embout suivant la revendication 1, caractérisé par le fait que la plaque de filtration (6; 11; 16, 30; 46) est fixée par soudage à la plaque adaptatrice (2; 2'; 2'').

3. Embout inférieur suivant la revendication 1, caractérisé par le fait que la plaque de filtration (6; 11; 16; 30; 46) est fixée par brasage à la plaque adaptatrice (2; 2'; 2'').

4. Embout inférieur suivant la revendication 1, caractérisé par le fait que la plaque de filtration (6; 11; 16; 30; 46) est fixée par rivetage à la plaque adaptatrice (2; 2'; 2'').

5. Embout inférieur suivant la revendication 1, caractérisé par le fait que la plaque de filtration (6; 11; 16; 30; 46) est fixée à la plaque adaptatrice (2; 2'; 2'') par l'intermédiaire de moyens de fixation de tubes-guides de l'assemblage, sur l'embout inférieur.

6. Embout inférieur suivant l'une quelconque des revendications 1 à 5, caractérisé par le fait que les trous de la plaque de filtration (6; 11; 16; 30; 46) sont réalisés par découpage de la plaque.

7. Embout inférieur suivant l'une quelconque des revendications 1 à 5, caractérisé par le fait que les trous de la plaque de filtration (6; 11; 16; 30; 46) sont réalisés par emboutissage.

8. Embout inférieur suivant l'une quelconque des revendications 1 à 7, caractérisé par le fait que la plaque de filtration (6; 11; 16; 30; 46) comporte des ouvertures (36) en vis-à-vis de zones de liaison de tubes-guides de l'assemblage avec la plaque adaptatrice (2; 2'; 2'') de l'embout inférieur (1).

9. Embout suivant l'une quelconque des revendications 1 à 8, caractérisé par le fait que la plaque de filtration (30) comporte des ouvertures de forme carrée (40).

10. Embout suivant l'une quelconque des revendications 1 à 8, caractérisé par le fait que la plaque de filtration (46) comporte des ouvertures délimitées par des lames parallèles (45).

11. Embout inférieur suivant l'une quelconque des revendications 1 à 10, caractérisé par le fait que la plaque de filtration (6; 11; 16; 30; 46) est évidée dans une partie centrale (35) venant en contact avec la partie centrale de la plaque adaptatrice (2; 2'; 2'') de l'embout inférieur (1) et que la plaque adaptatrice (2; 2'; 2'') comporte dans cette zone des perçages dont la dimension est inférieure à la taille des particules dont on effectue la retenue, en remplacement de passages d'eau de plus grande dimension traversant la plaque adaptatrice (2, 2', 2'') dans ses autres parties.

12. Embout inférieur suivant l'une quelconque des revendications 1 à 11, caractérisé par le fait que la plaque de filtration (11) est constituée par une plaque fine en matériau élastique susceptible d'être introduite à l'état déformé entre les pieds (12) de l'embout inférieur (10) puis mise à plat contre la face inférieure de la plaque adaptatrice.

13. Embout inférieur suivant l'une quelconque des revendications 1 à 11, caractérisé par le fait que la plaque de filtration (16) comporte au moins deux parties (16a, 16b) qui sont introduites séparément entre les pieds (15) de l'embout inférieur et juxtaposées suivant un bord de raccordement (17).

14. Embout inférieur suivant l'une quelconque des revendications 1 à 13, caractérisé par le fait que la plaque de filtration (6; 11; 16; 30; 46) est réalisée en un alliage de nickel à durcissement structural.

15. Embout inférieur suivant l'une quelconque des revendications 1 à 13, caractérisé par le fait que la plaque de filtration (6; 11; 16; 30; 46) est réalisée en un acier martensitique.

16. Assemblage combustible pour réacteur nucléaire comportant un embout inférieur filtrant selon l'une quelconque des revendications 1 à 15.

17. Assemblage combustible pour réacteur nucléaire comportant des tubes-guides (8) reliés à leur partie inférieure à un embout inférieur (1) ayant des ouvertures de passage (41) pour un fluide de refroidissement et un dispositif de filtration de débris caractérisé par le fait que le dispositif de filtration de débris comporte une plaque (6; 11; 16; 30; 46) fixée à la partie inférieure de la plaque adaptatrice (2; 2'; 2''), ladite plaque adaptatrice comprenant des ouvertures de passage du fluide de refroidissement disposées suivant un réseau à maille carrée.

18. Assemblage combustible comportant un embout inférieur (1), un premier ensemble de tubes-guides (8) reliés à l'embout inférieur (1) et assurant la rigidité de la structure de l'assemblage, une pluralité de grilles-entretoises (9) et un second ensemble de tubes-guides (8') non reliés à l'embout inférieur (1), caractérisé par le fait qu'il comporte un embout inférieur filtrant selon l'une quelconque des revendications 1 à 15.

19. Assemblage combustible suivant la revendication 18, dans lequel la plaque adaptatrice (2'') de l'embout inférieur (1) est traversée par une ouverture (18; 33), dans le prolongement de chacun des tubes-guides (8') du second ensemble, caractérisé par le fait que la plaque de filtration (30) est fixée à la plaque adaptatrice (2'') par l'intermédiaire de rivets (32) engagés chacun dans une ouverture (18; 33) de la plaque adaptatrice (24) et dans une ouverture correspondante (37) de la plaque de filtration.

## Patentansprüche

1. Fußstück einer Brennstoffanordnung eines Kernreaktors mit einer Adapterplatte (2; 2'; 2''), Stützfüßen (3; 12; 15) und einer Vorrichtung zum Zurückhalten von in dem Kühlfluid des Reaktors enthaltenen Partikeln, dadurch gekennzeichnet, daß die Rückhaltevorrichtung (6; 11; 16; 30; 46) aus einer Platte besteht, die an der Unterseite der Adapterplatte angebracht ist und mit Filterlöchern durchsetzt ist, die die Adapterplatte durchquerenden Fluiddurchlaßöffnungen gegenüberliegend angeordnet sind.

2. Fußstück nach Anspruch 1, dadurch gekennzeichnet, daß die Filterplatte (6; 11; 16; 30; 46) durch Schweißen an der Adapterplatte (2; 2'; 2'') befestigt ist.

3. Fußstück nach Anspruch 1, dadurch gekennzeichnet, daß die Filterplatte (6; 11; 16; 30; 46) durch Löten an der Adapterplatte (2; 2'; 2'') befestigt ist.

4. Fußstück nach Anspruch 1, dadurch gekennzeichnet, daß die Filterplatte (6; 11; 16; 30; 46) durch Nieten an der Adapterplatte (2; 2'; 2'') befestigt ist.

5. fußstück nach Anspruch 1, dadurch gekennzeichnet, daß die Filterplatte (6; 11; 16; 30; 46) an der Adapterplatte (2; 2'; 2'') über Einrichtungen befestigt ist, die zur Befestigung von Führungsrohren der Anordnung auf dem Fußstück dienen.

6. Fußstück nach einem der Ansprüche 1 bis 5, dadurch gekennzeichnet, daß die Löcher der Filterplatte (6; 11; 16; 30; 46) durch Stanzen der Platte gebildet sind.

7. Fußstück nach einem der Ansprüche 1 bis 5, dadurch gekennzeichnet, daß die Löcher der Filterplatte (6; 11; 16; 30; 46) durch Ziehen gebildet sind.

8. Fußstück nach einem der Ansprüche 1 bis 7, dadurch gekennzeichnet, daß die Filterplatte (6; 11; 16; 30; 46) Öffnungen (36) aufweist, die Verbindungsbereichen der Führungsrohre der Anordnung mit der Adapterplatte (2, 2'; 2'') des Fußstücks (1) gegenüberliegen.

9. Fußstück nach einem der Ansprüche 1 bis 8, dadurch gekennzeichnet, daß die Filterplatte (30) viereckige Öffnungen (40) aufweist.

10. Fußstück nach einem der Ansprüche 1 bis 8, dadurch gekennzeichnet, daß die Filterplatte (46) durch parallele Lamellen (45) begrenzte Öffnungen aufweist.

11. Fußstück nach einem der Ansprüche 1 bis 10, dadurch gekennzeichnet, daß die Filterplatte (6; 11; 16; 30; 46) in einem zentralen Bereich (35), der in Kontakt mit dem zentralen Bereich der Adapterplatte (2; 2'; 2'') des Fußstücks (1) gelangt, durchbrochen ist, und daß die Adapterplatte (2; 2'; 2'') in diesem Bereich Perforierungen aufweist, deren Abmessungen kleiner sind als die Größe der zurückzuhaltenden Partikel,wobei die Perforierungen anstelle von größer bemessenen Wasserdurchlässen vorgesehen sind, welche die anderen Bereiche der Adapterplatte (2; 2'; 2'') durchqueren.

12. Fußstück nach einem der Ansprüche 1 bis 11, dadurch gekennzeichnet, daß die Filterplatte (11) durch eine dünne Platte aus elastischem Material gebildet ist, die in verformtem Zustand zwischen die Füße (12) des Fußstücks (1) eingeführt und sodann flach an der Unterseite der Adapterplatte anliegend angebracht werden kann.

13. Fußstück nach einem der Ansprüche 1 bis 11, dadurch gekennzeichnet, daß die Filterplatte (16) wenigstens zwei Teile (16a, 16b) aufweist, die getrennt und entlang einer Verbindungskante (17) nebeneinanderliegend zwischen die Füße (15) des Fußstücks einführbar sind.

14. Fußstück nach einem der Ansprüche 1 bis 13, dadurch gekennzeichnet, daß die Filterplatte (6; 11; 16; 30; 46) aus einer gehärteten Nickellegierung besteht.

15. Fußstück nach einem der Ansprüche 1 bis 13, dadurch gekennzeichnet, daß die Filterplatte (6; 11; 16; 30; 46) aus martensitischem Stahl besteht.

16. Brennstoffanordnung für einen Kernreaktor mit einem unteren Filter-Fußstück nach einem der Ansprüche 1 bis 15.

17. Brennstoffanordnung für einen Kernreaktor mit Führungsrohren (8), deren untere Bereiche mit einem Fußstück (1) verbunden sind, das Durchgangsöffnungen (41) für ein Kühlfluid und eine Rückstandsfiltervorrichtung aufweist, dadurch gekennzeichnet, daß die Rückstandsfiltervorrichtung eine am unteren Bereich der Adapterplatte (2; 2'; 2'') angebrachte Platte (6; 11; 16; 30; 46) aufweist, wobei die Adapterplatte nach Art eines Netzes mit viereckigen Maschen angeordnete Kühlfluid-Durchgangsöffnungen aufweist.

18. Brennstoffanordnung mit einem Fußstück (1), einer ersten mit dem Fußstück (1) verbundenen Einheit von Führungsrohren (8), die die Steifigkeit der Struktur der Anordnung gewährleistet, mehreren Gitterträgern (9) und einer zweiten Einheit von Führungsrohren (8'), die nicht mit dem Fußstück (1) verbunden sind, dadurch gekennzeichnet, daß sie ein unteres Filter-Fußstück nach einem der Ansprüche 1 bis 15 aufweist.

19. Brennstoffanordnung nach Anspruch 18, bei der die Adapterplatte (2'') des Fußstücks (1) in der Verlängerung jedes der Führungsrohre (8') von einer Öffnung (18; 33) durchsetzt ist, dadurch gekennzeichnet, daß die Filterplatte (30) durch Niete (32) an der Adapterplatte (2'') angebracht ist, welche jeweils in eine Öffnung (18; 33) der Adapterplatte (24) und in eine entsprechende Öffnung (37) der Filterplatte eingreifen.

## Claims

1. A lower end nozzle of a fuel assembly of a nuclear reactor, comprising an adaptor plate (2, 2', 2''), supporting feet (3, 12, 15) and a device for retaining particles contained in the cooling fluid of the reactor, characterised in that the retaining device (6, 11, 16, 30, 46) consists of a plate fastened against the underside of the adaptor plate and drilled with filter holes arranged opposite fluid flow holes provided in the adaptor plate.

2. An end nozzle according to claim 1, characterised in that the filter plate (6, 11, 16, 30, 46) is attached to the adaptor plate (2, 2', 2'') by welding.

3. A lower end nozzle according to claim 1, characterised in that the filter plate (6, 11, 16, 30, 46) is attached to the adaptor plate (2, 2', 2'') by brazing.

4. A lower end nozzle according to claim 1, characterised in that the filter plate (6, 11, 16, 30, 46) is attached to the adaptor plate (2, 2', 2'') by riveting.

5. A lower end nozzle according to claim 1, characterised in that the filter plate (6, 11, 16, 30, 46) is attached to the adaptor plate (2, 2', 2'') by means for attaching the guide tubes of the assembly to the lower end nozzle.

6. A lower end nozzle according to any of claims 1 to 5, characterised in that the holes of the filter plate (6, 11, 16, 30, 46) are made by cutting out from the plate.

7. A lower end nozzle according to any one of claims 1 to 5, characterised in that the holes of the filter plate (6, 11, 16, 30, 46) are made by stamping.

8. A lower end nozzle according to any one of claims 1 to 7, characterised in that the filter plate (6, 11, 14, 30, 46) has apertures (36) opposite zones of connection of guide tubes of the assembly to the adaptor plate (2, 2', 2'') of the lower end nozzle (1).

9. An end nozzle according to any one of claims 1 to 8, characterised in that the filter plate (30) has square apertures (40).

10. An end nozzle according to any one of claims 1 to 8, characterised in that the filter plate (46) has apertures delimited by parallel lamellae (45).

11. A lower end nozzle according to any one of claims 1 to 10, characterised in that the filter plate (6, 11, 16, 30, 46) is recessed in a central part (35) which comes in contact with the central part of the adaptor plate (2, 2', 2'') of the lower end nozzle (1), and in that the adaptor plate (2, 2', 2'') possesses, in this zone, holes of a dimension smaller than the size of the particles to be retained, instead of water passages of larger dimension which pass through the other parts of the adaptor plate (2, 2', 2'').

12. A lower end nozzle according to any one of claims 1 to 11, characterised in that the filter plate (11) consists of a thin plate of elastic material capable of being introduced in the deformed state between the feet (12) of the lower end nozzle (10) and then placed flat against the lower surface of the adaptor plate.

13. A lower end nozzle according to any one of claims 1 to 11, characterised in that the filter plate (16) comprises at least two parts (16a, 16b) which are introduced separately between the feet (15) of the lower end nozzle and which are placed next to one another along a connecting edge (17).

14. A lower end nozzle according to any one of claims 1 to 13, characterised in that the filter plate (6, 11, 16, 30, 46) is produced from a nickel alloy with structural hardening.

15. A lower end nozzle according to any one of claims 1 to 13, characterised in that the filter plate (6, 11, 16, 30, 46) is produced from a martensitic steel.

16. A fuel assembly for a nuclear reactor having a lower filtering end nozzle according to any one of claims 1 to 15.

17. A fuel assembly for a nuclear reactor having guide tubes (8) attached at their lower end to a lower end nozzle (1) having openings therethrough (41) for a cooling fluid and a debris filter, characterised in that the debris filter comprises a plate (6, 11, 16, 30, 46) attached to the bottom of the adaptor plate (2, 2', 2''), the said adaptor plate comprising cooling fluid apertures disposed in a square grid pattern.

18. A fuel assembly comprising a lower end noxzle (1), a first set of guide tubes (8) attached to the lower end nozzle (1) and ensuring the rigidity of the structure of the assembly, a plurality of spacer grids (9) and a second set of guide tubes (8') not attached to the lower end nozzle (1), characterised in that it has a lower filtering end nozzle according to any one of claims 1 to 15.

19. A fuel assembly according to claim 18, in which the adaptor plate (2'') of the lower end nozzle (1) has passing through it an aperture (18-33) in line with each of the guide tubes (8') of the second set, characterised in that the filter plate (30) is attached to the adaptor plate (2'') by means of rivets (32), each engaging in an aperture (18-33) of the adaptor plate (24) and in a corresponding aperture (37) of the filter plate.
